# EUROPEAN PATENT APPLICATION

(11) **EP 4 495 950 A1**
(43) Date of publication of application: **22.01.2025**
(21) Application number: 23771033.0
(22) Date of filing: 10.03.2023
(51) Int. Cl.: G21C 9/016, G21C 1/32

(54) **COOLING DEVICE AND COOLING METHOD FOR SMALL MODULAR REACTOR**

(30) Priority: 14.03.2022 KR 20220031448
(71) Applicant: Korea Hydro & Nuclear Power Co., Ltd, Gyeongju-si, Gyeongsangbuk-do 38120 (KR)
(72) Inventor: KIM, Mun Soo, Daejeon 34049 (KR); CHO, Gung Su, Daejeon 34073 (KR)
(74) Representative: Taruttis, Tilman
(86) International application number: PCT/KR2023/003289
(87) International publication number: WO 2023/177154

(57) **Abstract**

A small modular reactor cooling device and cooling method are provided. A small modular reactor cooling device includes: a reactor vessel in which a coolant circulates along a flow path structure; and a coolant storage unit provided inside the reactor vessel and charged with the coolant inside based on the circulating flow, wherein the coolant storage unit is in contact with a core melted material through the coolant charged therein when the core melted material is generated in the reactor vessel in the event of a serious accident and performs a cooling treatment on the core melted material to prevent the core melted material from leaking out to the outside.

## Description

### [Technical Field]

The present disclosure relates to a cooling device and cooling method for small modular reactor.

### [Background Art]

In the nuclear power plant related technology field, a small modular reactor (SMR) is being developed with a focus on improving safety. However, despite the existence of various safety stop systems related to safety, there have been no specific cases in which measures to prevent external leakage of a melted core material within an SMR reactor have been developed for serious accidents where the probability of occurrence is very low.

To cope with a loss of integrity of a reactor building in the event of a major accident at a general large commercial nuclear power plant, there are several countermeasures to retain and cool the core melted material to prevent direct reaction between the core melted material and a lower cavity floor concrete of the reactor building. For example, a representative facility is a core catcher, which collects and retains the core melted material and cools the core melted material by supplying a coolant in the lower cavity of the reactor building.

The core catcher, which was developed by installing a cooling flow path at the bottom of the conventional core melted material collection vessel to cool the core melted material, includes AREVA EPR and GE ESBWR application technologies. The AREVA EPR core catcher consists of a pre-catcher that collects the core melted material, a core melted material transfer channel, and a space for spreading and cooling the core melted material. The cooling flow path of the AREVA EPR is horizontal and has the form of a square cooling channel with the cooling flow path being separated by a structure that supports a vessel for retaining and spreading the core melted material.

The GE ESBWR core catcher has a structure in which a funnel-shaped vessel that collects, spreads, and cools the core melted material is installed directly below the reactor. All of these existing core catchers are installed outside the reactor. However, in the case of SMR that does not have a containment building or is designed to be in close contact with the reactor vessel, such a core catcher may not be installed.

### [Disclosure]

### [Technical Problem]

Aspects of the present disclosure are to enable in-vessel retention of an internal core melted material in the event of a serious accident in SMR.

Aspects of the present disclosure are also to ensure that the core melted material is caught on a coolant tank at a bottom of a reactor in the event of a serious accident.

Aspects of the present disclosure are also to ensure time for a stop cooling of a system to be smoothly performed by other passive or active safety equipment.

Aspects of the present disclosure are not limited to the aspects mentioned above, and other aspects not mentioned will be clearly understood by those skilled in the art from the following description.

### [Technical Solution]

According to an aspect of the present disclosure, there is provided a small modular reactor cooling method including: circulating a coolant inside a reactor vessel along a flow path structure; charging the coolant into a coolant storage unit inside the reactor vessel; generating a core melted material in the reactor vessel in the event of a serious accident; and preventing the core melted material from leaking out to the outside by cooling the core melted material through the coolant charged inside the coolant storage unit.

The coolant storage unit may include a receptor positioned at a lower portion of an inner circumferential surface of the reactor vessel, and an injection body provided in the receptor and into which the coolant is injected according to the circulating flow.

The injection body may allow the coolant to flow from the outside to the inside and prevent the coolant from leaking from the inside to the outside.

The injection body may prevent the leakage through a unidirectional opening and closing operation.

The injection body may perform the opening and closing operation using a check valve method.

The receptor may be formed so that a lower portion corresponds to a lower inner circumferential surface of the reactor vessel and an upper portion is rounded downward.

The injection body may be provided on at least a portion of an upper peripheral portion of the receptor, based on the upper portion that is rounded downward, and be injected with the coolant according to the circulating flow.

According to another aspect of the present disclosure, there is provided a small modular reactor cooling device including: a reactor vessel in which a coolant circulates along a flow path structure; and a coolant storage unit provided inside the reactor vessel and charged with the coolant inside based on the circulating flow, wherein the coolant storage unit is in contact with a core melted material through the coolant charged therein when the core melted material is generated in the reactor vessel in the event of a serious accident and performs a cooling treatment on the core melted material to prevent the core melted material from leaking out to the outside.

### [Advantageous Effects]

According to the small modular reactor cooling device and cooling method of the present disclosure as described above, there are one or more of the following effects.

The present disclosure may perform in vessel retention of the internal core melted material in the event of a serious accident in SMR.

Furthermore, the present disclosure may ensure that the core melted material is caught on the coolant tank at the bottom of the reactor in the event of a serious accident.

Furthermore, the present disclosure may ensure time for the stop cooling of the system to be smoothly performed by other passive or active safety equipment.

### [Description of Drawings]

FIG. 1 is a block diagram illustrating a configuration of a small modular reactor cooling device according to an embodiment of the present disclosure;
FIG. 2 is a block diagram illustrating the configuration according to FIG. 1 in detail;
FIG. 3 is a configuration diagram illustrating the configuration according to FIG. 1;
FIG. 4 is a schematic diagram illustrating an embodiment of the configuration according to FIG. 1;

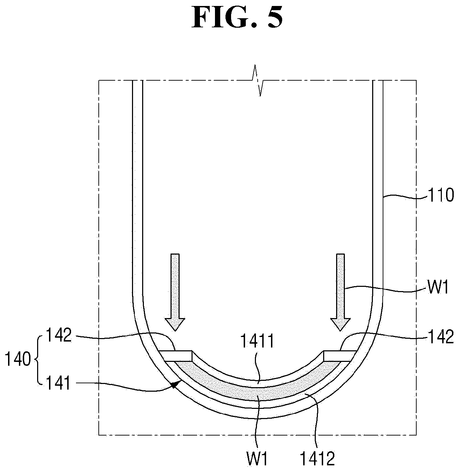

FIG. 5 is a schematic diagram illustrating another embodiment of the configuration according to FIG. 1; and
FIG. 6 is a flowchart sequentially illustrating a small modular reactor cooling method according to an embodiment of the present disclosure.

### [Mode for Invention]

Hereinafter, embodiments of the present disclosure will be described in detail with reference to the accompanying drawings. Hereinafter, preferred embodiments of the present disclosure will be described in detail with reference to the attached drawings. Advantages and features of the present disclosure, and a method for achieving the advantages and features will become apparent with reference to the embodiments described below in detail in conjunction with the accompanying drawings. However, the present disclosure is not limited to the embodiments disclosed below, but may be implemented in a variety of different forms, these embodiments will be provided only in order to make the present disclosure complete and allow those skilled in the art to completely recognize the scope of the present disclosure, and the present disclosure is only defined by the scope of the claims. The same reference numbers indicate the same components throughout the specification.

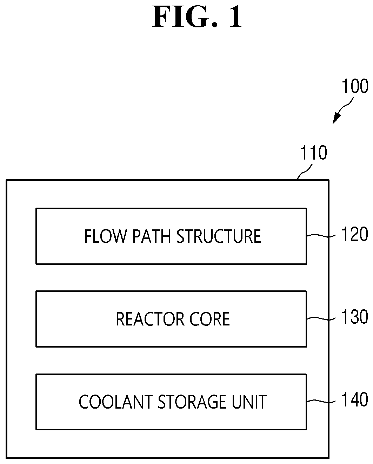

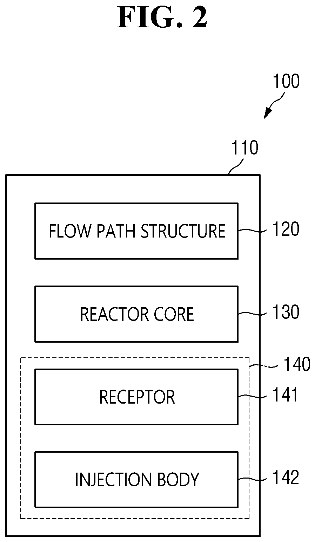

Referring to FIG. 1, a small modular reactor cooling device 100 according to an embodiment of the present disclosure includes a reactor vessel 110, a flow path structure 120, a reactor core 130, and a coolant storage unit 140. Referring to FIG. 2, the coolant storage unit 140 includes a receptor 141 and an injection body 142.

Referring to FIGS. 2 to 4, the reactor vessel 110 of the small modular reactor cooling device 100 is provided with the flow path structure 120 therein. The flow path structure 120 is intended to allow a coolant W1 inside the reactor vessel 110 to circulate.

The flow path structure 120 corresponds to a predetermined structure or area for circulation of the coolant W1. The coolant storage unit 140 is provided inside the reactor vessel 110.

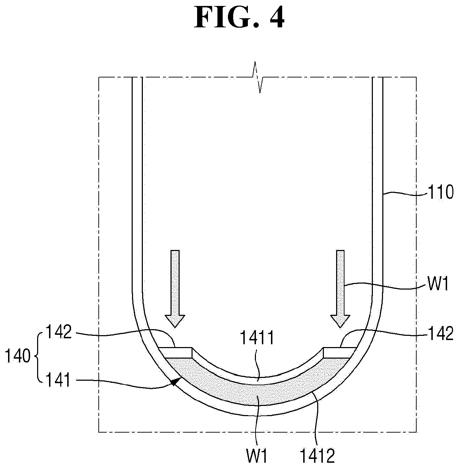

Referring to FIG. 4, the coolant storage unit 140 has the coolant W1 at least partially charged therein based on the circulating flow of the coolant W1. When a core melted material is generated in the reactor vessel 110 in the event of a serious accident, the coolant storage unit 140 comes into contact with the core melted material through the coolant W1 charged therein.

The coolant storage unit 140 performs cooling treatment on the core melted material based on the contact with the core melted material. At the same time, the coolant storage unit 140 prevents the core melted material from leaking out to the outside.

Here, the coolant storage unit 140 serves to collect the core melted material and prevent direct heat transfer with a lower outer wall of the reactor vessel 110. The receptor 141 of the coolant storage unit 140 is positioned at a lower portion of an inner circumferential surface of the reactor vessel 110.

The injection body 142 of the coolant storage unit 140 is provided in the receptor 141. The coolant W1 is injected into the injection body 142 according to the circulating flow of the coolant.

Furthermore, the injection body 142 allows the coolant W1 to flow from the outside to the inside. The injection body 142 prevents the coolant W1 from leaking from the inside to the outside.

The injection body 142 prevents the leakage through a unidirectional opening and closing operation. The injection body 142 allows the opening and closing operation to be performed using a check valve method, etc.

The receptor 141 is formed so that a lower portion 1412 thereof corresponds to a lower inner circumferential surface of the reactor vessel 110. The receptor 141 is formed so that an upper portion 1411 thereof is rounded downward.

The injection body 142 is provided on at least a portion of an upper peripheral portion of the receptor 141, based on the upper portion 1411 that is rounded downward. The coolant W1 is injected into the injection body 142 according to the circulating flow of the coolant W1.

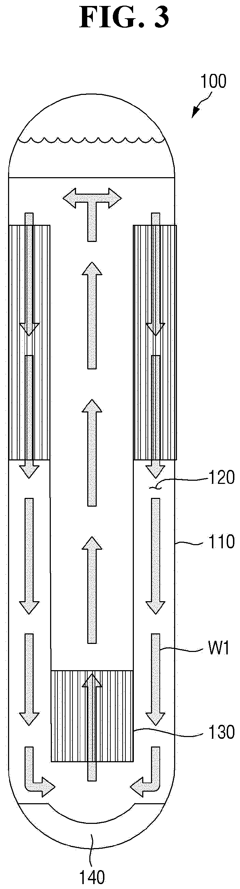

Here, the receptor 141 is provided so that a portion of an outer circumferential surface thereof has a double structure, as illustrated in FIG. 3. Furthermore, the receptor 141 may also be provided so that the outer circumferential surfaces of the upper, lower, left, and right sides have an overall dual structure, as illustrated in FIG. 4.

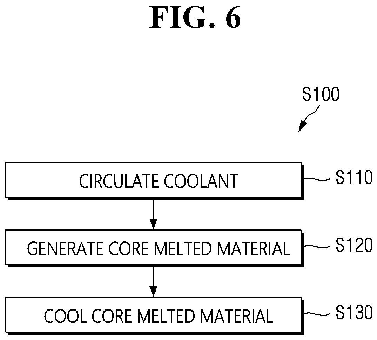

Referring to FIG. 6, in a small modular reactor cooling method (S100) according to an embodiment of the present disclosure, a coolant W1 circulates along a flow path structure 120 inside a reactor vessel 110. The circulating coolant W1 is charged into a coolant storage unit 140 inside the reactor vessel 110.

Here, when a serious accident occurs, a core melted material is generated in the reactor vessel 110. The coolant storage unit 140 cools the core melted material through the coolant W1 charged therein.

Furthermore, the coolant storage unit 140 prevents the core melted material from leaking out to the outside. A receptor 141 of the coolant storage unit 140 is positioned at a lower portion of an inner circumferential surface of the reactor vessel 110.

An injection body 142 of the coolant storage unit 140 is provided in the receptor 141, and the coolant W1 is injected into the injection body 142 according to the circulating flow. The injection body 142 allows the coolant W1 to flow from the outside to the inside, and prevents the coolant W1 from leaking out to the outside.

The injection body 142 prevents the leakage through a unidirectional opening and closing operation. The injection body 142 performs the opening and closing operation using a check valve method. The receptor 141 is formed so that a lower portion 1412 thereof corresponds to a lower inner circumferential surface of the reactor vessel 110 and an upper portion 1411 thereof is rounded downward.

Here, the injection body 142 is provided on at least a portion of an upper peripheral portion of the receptor 141, based on the upper portion 1411 that is rounded downward. The coolant W1 is injected into the injection body 142 according to the circulating flow.

Although the embodiments of the present disclosure have been described with reference to the accompanying drawings, those of ordinary skill in the art to which the present disclosure pertains will understand that the present disclosure may be embodied in other specific forms without changing the technical spirit or essential features thereof. Therefore, it should be understood that the exemplary embodiments described above are illustrative in all aspects and not restrictive.

## Claims

1. A small modular reactor cooling method comprising:
circulating a coolant inside a reactor vessel along a flow path structure;
charging the coolant into a coolant storage unit inside the reactor vessel;
generating a core melted material in the reactor vessel in the event of a serious accident; and
preventing the core melted material from leaking out to the outside by cooling the core melted material through the coolant charged inside the coolant storage unit.

2. The small modular reactor cooling method of claim 1, wherein the coolant storage unit includes:
a receptor positioned at a lower portion of an inner circumferential surface of the reactor vessel, and
an injection body provided in the receptor and into which the coolant is injected according to the circulating flow.

3. The small modular reactor cooling method of claim 2, wherein the injection body allows the coolant to flow from the outside to the inside and prevents the coolant from leaking from the inside to the outside.

4. The small modular reactor cooling method of claim 3, wherein the injection body prevents the leakage through a unidirectional opening and closing operation.

5. The small modular reactor cooling method of claim 4, wherein the injection body performs the opening and closing operation using a check valve method.

6. The small modular reactor cooling method of claim 3, wherein the receptor is formed so that a lower portion corresponds to a lower inner circumferential surface of the reactor vessel and an upper portion is rounded downward.

7. A small modular reactor cooling device comprising:
a reactor vessel in which a coolant circulates along a flow path structure; and
a coolant storage unit provided inside the reactor vessel and charged with the coolant inside based on the circulating flow,
wherein the coolant storage unit is in contact with a core melted material through the coolant charged therein when the core melted material is generated in the reactor vessel in the event of a serious accident and performs a cooling treatment on the core melted material to prevent the core melted material from leaking out to the outside.

8. The small modular reactor cooling device of claim 7, wherein the coolant storage unit includes:
a receptor positioned at a lower portion of an inner circumferential surface of the reactor vessel, and
an injection body provided in the receptor and into which the coolant is injected according to the circulating flow.

9. The small modular reactor cooling device of claim 8, wherein the injection body allows the coolant to flow from the outside to the inside and prevents the coolant from leaking from the inside to the outside.
